# EUROPEAN PATENT APPLICATION

(11) **EP 1 111 843 A2**
(43) Date of publication of application: **27.06.2001**
(21) Application number: 00309174.1
(22) Date of filing: 18.10.2000
(51) Int. Cl.: H04L 12/28, H04L 12/56, H04L 12/26

(54) **System and method for providing wireless network coordination**

(30) Priority: 22.12.1999 US 469282
(71) Applicant: AT&T Corp., New York, NY 10013-2412 (US)
(72) Inventor: Ghassemzadeh, Saeed Seyed, Andover, NJ 07821 (US); Sherman, Matthew James, Succasunna, NJ 07876 (US)
(74) Representative: Asquith, Julian Peter

(57) **Abstract**

A resource managing device that coordinates the use of a RF wireless networks to permit effective and fair use of the available RF resources in areas of dense utilization. The resource managing device is in communication with and controls numerous wireless networks within a same RF environment in order to coordinate the use of the wireless network resources. Accordingly, interference can be minimized by dynamically and efficiently distributing the RF resources within a RF environment between numerous wireless networks located within the same RF environment.

## Description

### BACKGROUND OF THE INVENTION

### 1. Field of Invention

The invention relates to the field of communications, and more particularly, to the coordinated use of wireless network resources by wireless networks.

### 2. Description of Related Art

The increased demand for integrating communication devices, such as telephone, facsimile, computers, and the like, has led to an increasing requirement for network capability within a premise, such as an office, a home, or an apartment building. Currently, communication service providers now provide many premises with broadband service for connecting to networks in order for subscribers to satisfy their network requirements within their respective premises. While the techniques for providing broadband service to a premise are controlled by the service provider, how the subscribers distributes the broadband service to devices within the premise is up to the particular subscriber.

One alternative, that has recently become quite popular, is to create a wireless network via radio frequencies (RF). Many products are now available that permit broadband data to be transmitted from device to device using RF technology. Most of the products rely on unlicensed "junk" bands, such as 915mHz ± 3mHz, 2450mHz ± 50mHz, and 5.8gHz ± 75mHz. These frequency bands tend to be unregulated, and therefore, rely largely on RF "etiquette", such as IEEE 802.11, Bluetooth, HomeRF, HyperLan, and the like, to keep users from interfering with one another.

One problem with these etiquettes is that they were not developed for dense RF utilization. They are optimized for peer to peer operation (possibly with a single coordinating base station). The etiquettes were not designed to utilize "cellular" like intelligence which allows many users to effectively be coordinated so as to achieve efficient and fair utilization of available RF resources. As a result of inadequate coordination of numerous users of RF resources, interference between the users may occur. Ultimately the interference between users can increase to the point where the quality of communication for all users becomes degraded.

Accordingly, new technology is required to coordinate the use of RF resources between wireless networks sharing an RF environment.

### SUMMARY OF THE INVENTION

The interference problem can be particularly difficult in multiple dwelling units (MDU), such as apartment buildings, where multiple wireless networks sharing the same RF environment can cause the RF environment to become so crowded that unacceptable performance results for some users. For example, a person in Apartment 1 may be trying to place a phone call over a communication network from their computer via a wireless link with modem. Simultaneously, a second person in Apartment 2 on a floor directly below Apartment 1 may be downloading streaming video via a wireless link. Both are using wireless LAN technology (e.g., IEEE 802.11) to communicate between their respective computers and wireless modems in order to ultimately communicate with a network. In this example, because the streaming video requires so much of the available RF bandwidth to communicate with the wireless modem in Apartment 2, the user in Apartment 1 will not be able to maintain a reliable phone connection due to the interference. Alternatively, the next time around, the case might be reversed, with the user in Apartment 2 unable to fulfill their bandwidth needs due to interference from the wireless network use in Apartment 1.

While the above example is relatively simple, many more complex situations are possible where the user can experience poor network performance. Even such seemingly robust activities such as searching the Web can become severely degraded due to poor sharing of RF resources. Additionally, Internet Protocol (IP) is very sensitive to the number of packets which are corrupted and the acknowledgments it receives. While an occasional lost packet of information or acknowledgment will not dramatically effect performance, as many users try to share the same RF resources interference may become excessive and performance will degrade accordingly. Furthermore, as a result of the performance degradation, subscribers may think that their Internet service provider (ISP) is responsible for the poor quality, when in fact the problem is poor RF coordination.

The present invention relates to a system and method for coordinating a wireless network, and more particularly to a resource managing device that coordinates the use of RF wireless networks to permit effective and fair use of the available RF resources in areas of dense utilization. The resource managing device can be in communication with and can control numerous wireless networks within an RF environment in order to coordinate the use of the wireless network resources of the RF environment. Accordingly, interference can be minimized by dynamically and efficiently distributing the RF resources within a RF environment between numerous wireless networks located within the same RF environment.

### BRIEF DESCRIPTION OF THE DRAWINGS

The invention will be described with reference to the accompanied drawings, in which like elements are referenced with like numerals, and in which:
Figure 1 is an exemplary block diagram of a network resource managing system according to the present invention;
Figure 2 is an exemplary block diagram of the resource managing device of Figure 1;
Figure 3 is an exemplary block diagram of the modem devices of Fig. 1;
Figure 4 is an exemplary data structure for storing RF environment information in the modem memory of Figure 3;
Figure 5 is an exemplary data structure for storing RF environment network resource information; and
Figure 6 is a flowchart outlining an exemplary process of the resource managing device.

### DETAILED DESCRIPTION OF PREFERRED EMBODIMENTS

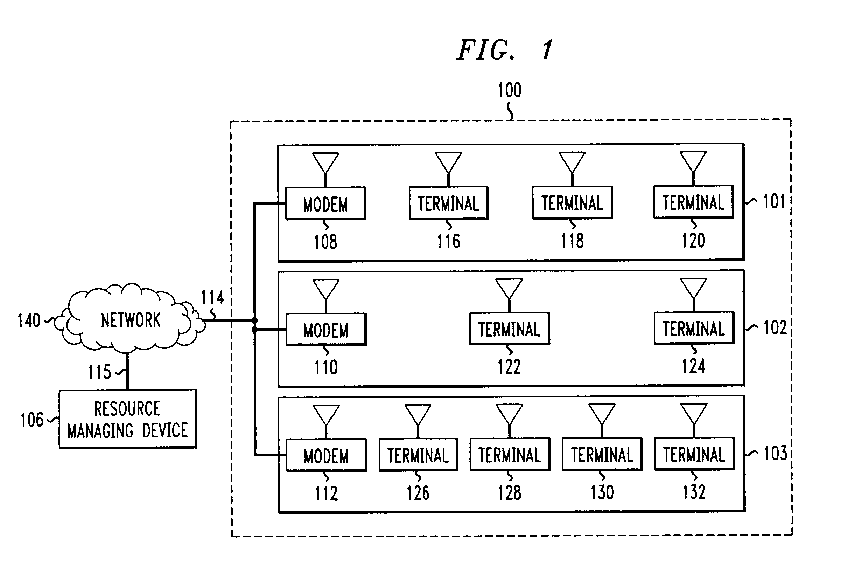

Fig. 1 shows a wireless resource managing system. The system includes a RF environment 100, such as a multiple dwelling unit. The multiple dwelling unit 100 includes individual dwelling units 101, 102 and 103, each of which operates an independent wireless network between a modem 108-112 and at least one wireless terminal 116-132. Each modem has an implicit wireless transmission capability. For convenience, in this disclosure, the modem's ID (108-112) is also its wireless transmission ID, though these ID's need not be identical. The first wireless network in dwelling unit 101 exists between modem 108 and wireless terminals 116, 118 and 120. The second wireless network in dwelling unit 102 exists between modem 110 and wireless terminals 122 and 124. The third wireless network in dwelling unit 103 exists between modem 112 and wireless terminals 126, 128, 130 and 132.

Each of the modems 108-112 of the dwelling units 101-103, respectively, are connected to a network 140 via communication links 114. Alternatively, each of the modems can be connected to the network 140 via a separate communication link 114. Additionally, a resource managing device 106 is connected with the network 140 via a communication link 115. Accordingly, the resource managing device 106 and the modems 108-112 are in communication with network 140 through communication link 115 and 114, respectively. These communication links 114, 115 can be any type of connection that allows for the transmission of information. Some examples include conventional telephone lines, fiber optic lines, direct serial/parallel connections, cellular telephone connections, satellite communication links, local area networks (LANs), intranets and the like.

The wireless terminals 116-132 can be devices of any type that allow for the transmission and/or reception of communication signals. For example, the wireless terminals 116-132 may be telephones, computers, personal and digital assistants, video telephones, video conference apparatus, smart or computer assisted televisions, set top boxes and the like. For the purposes of the following description of the present invention, it will be assumed that wireless terminals 116-132 are computers.

The network 140 may be a single network or a plurality of networks of the same or different types. For example, the network 140 may include a local telephone network (such as Bell Atlantic's Network) in connection with a long distance network (such as the AT&T long distance telephone network). Furthermore, the network 140 may be a data network or a telecommunications network in connection with a data network. Any combination of telecommunications and data networks may be used without departing from the spirit and scope of the present invention. For the purposes of the discussion, it will be assumed that network 140 is a single data network.

The modems 108-112 can be devices of any type that conduct unidirectional or bidirectional wireless communications with the wireless terminals 116-132. In operation, the modems 108-112 receive data from the network 140 via communication link 114 and transmits the data to a selected wireless terminal 116-132. The modems 108-112 can also receive data transmitted from the wireless terminal 116-132 and transmit the data via communication link 114 to the network 140. The modems 108-112 can communicate with the wireless terminals 116-132 via a radio link using any well known communication protocols, such as FDMA, TDMA, CDMA, or the like without departing from the spirit and scope of the present invention.

The modems 108-112 can also be adapted to independently communicate with network 140 in order to report on a current RF environment or receive operating instructions. The operating instructions can include directions for the modems 108-112 to monitor its RF environment, transmit a RF environment report to the network 140, or to alter the modems 108-112's current use of RF resources. By having these capabilities, the modems 108-112, and their respective wireless networks, may be coordinated to use the network resources, such as frequency or time slots, within a RF environment 100, in order to reduce interference between the various wireless networks within the RF environment.

The resource managing device 106 is capable of monitoring the use of RF resources by the independent wireless networks of the RF environment 100 in order to determine the current use of RF resources. Based on the current use of the RF resources, the resource managing device 106 can then generate a RF coordination strategy to determine an efficient allocation of network resources between the wireless networks of the RF environment 100. The RF coordination strategy can then be transmitted to the independent wireless networks which can implement the strategy in order to reduce the interference between wireless networks of the dwelling units 101-103 of the RF environment 100.

The resource managing device 106 may be an independent unit coupled to the network 140 (as shown) or it may be distributed throughout the network 140. For example, the network resource managing device may be part of the various central offices or servers employed by the network 140 which are distributed throughout the network 140. Furthermore, the network resource managing device 106 may be incorporated into the modem devices 108-112 or the terminals 116-132. Any configuration that permits coordinated use of wireless networks of the RF environment 100 may be used without departing from spirit and scope of the present invention.

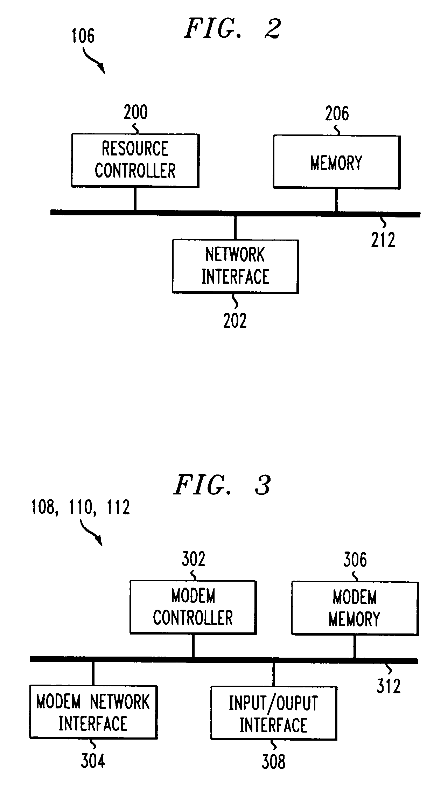

Figure 2 is an exemplary block diagram of a resource managing device 106. The resource managing device 106 includes a resource controller 200, a network interface 202, and a memory 206. The above components are coupled together through a control/signal bus 212.

The resource controller 200 can monitor the modems 108-112 of the dwelling units 101-103 via the network 140 and communication link 115 through the network interface 202 to gather information on the RF environment of each of the modems 108-112 and/or wireless terminals 116-132. The RF environment of each of the modems 108-112 and wireless terminals 116-132 can then be stored in memory 206. Once the resource controller 200 has gathered information about the RF environment of each of the modems 108-112 and wireless terminal 116-132, the resource controller 200 can then determine which modems 108-112 and/or wireless terminals 116-132 are interfering with each other or if there are any other interference sources in order to develop a RF coordination strategy for sharing network resources. The resource controller 200 can then transmit a set of instructions based on the RF coordination strategy to each of the modems 108-112. Based on the set of instructions received from the resource controller 200, the modems 108-112 and wireless terminals 116-132 may coordinate their use of the network resources with respect to surrounding modems 108-112.

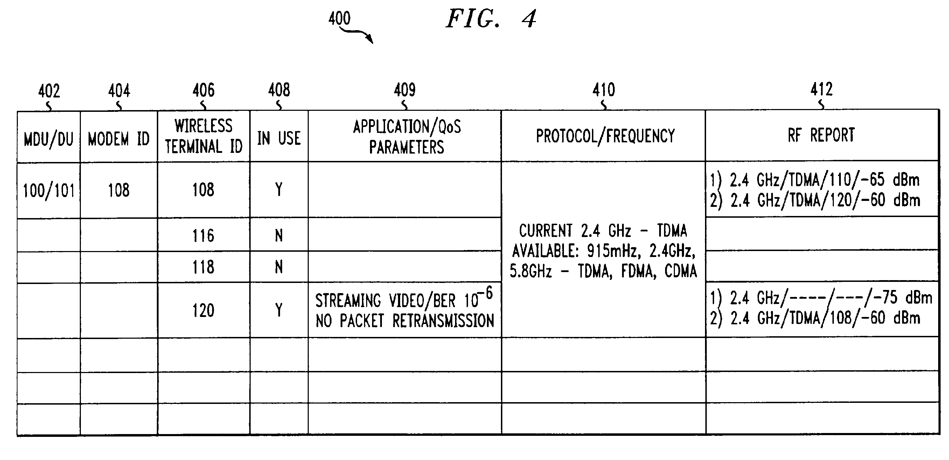

Fig. 3 is an exemplary block diagram of the modem 108-102 according to the present invention. The modem 108-110 includes a modem controller 302, a modem network interface 304, a modem memory 306, and a input/output interface 308. The above components are coupled together via a control/signal bus 312.

The modem controller 302 is capable of receiving data from the network 140 via the communication link 114 and the modem network interface 304 and selectively transmitting the received data to a wireless terminal 116-132 via the input/output interface 308. Likewise, the modem controller 302 can receive data from the wireless terminals 116-132 via input/output interface 308 and transmit the data to the network 140 via modem network interface 304 and the communication link 114. Additionally, the modem controller 302 can independently or at the request of the resource managing device 106 monitor the RF environment 100 via the input/output interface 308 and record uses of the network resources within the RF environment 100 by other devices. To accomplish this, the modem controller 302 may refrain from transmitting to its respective wireless terminal 116-132 for a period of time, and instead simply "listen" to all other transmission in the RF environment 100. Under the direction of the modem controller 302, this current use of the RF environment 100 can be temporarily stored in the modem memory 306 and sent to the resource managing device 106 periodically or upon request of the resource management device 106. The modem controller 302 may also command similar reports on the RF environment from the wireless terminals 116-132 in the network which would also be temporarily stored in modem memory 306.

Fig. 4 shows an exemplary data structure 400 for storing the current use of the RF environment 100 along with other operational data necessary for identifying the modem 108-112 and the wireless terminals 116-132 using the modem 108-112.

Field 402 contains a multiple dwelling unit and dwelling unit environment identifier for a particular modem 108-112. The multiple dwelling unit identifier can include any numeric, alphanumeric, or the like identifier which uniquely identifies a multiple dwelling unit along with the particular dwelling unit of the multiple dwelling unit. For example, the first entry in field 402 contains a "100/101" indicating that the modem is located in multiple dwelling unit 100, and more particularly that the modem is located within dwelling unit 101 of multiple dwelling unit 100.

Field 404 contains a modem ID which can be used by the network 140 to address data to a particular modem 108-110 of a particular dwelling unit 101-103. For example, the network 140 will address all data transmissions directed to the modem having modem ID 108 to the occupant of dwelling unit 101 within multiple dwelling unit 100.

Field 406 contains the wireless terminal ID's corresponding to the wireless terminal 116-132 being used in conjunction with the modems 108-112 to operate a wireless network within a particular dwelling unit 101-103. For example, as shown in field 406, the wireless terminals ID's 116, 118 and 120 correspond with the modem ID 108. Accordingly, the information in field 406 is used to identify the wireless terminals 116, 118 and 120 which in conjunction with modem ID 108 form the wireless network and dwelling unit 101.

Field 408 contains a BOOLEAN variable to indicate whether a wireless terminal 116-132 corresponding to the wireless terminal ID in field 406 is currently being used. For example, the wireless terminal corresponding to wireless terminal ID 116 is shown as not currently being used, as indicated by a "N" in field 408. However, the wireless terminal corresponding to terminal ID 120 is currently in use, as indicated by a "Y" in field 408.

Field 409 indicates the Application/Quality of Service (QoS) requirements of the terminal (if available). The application portion of field 409 can describe the type of application that is currently being conducted over a wireless link. The QoS requirement can include any measurement or statistic which identifies a level of service. For example, as shown in field 409, a bit error rate (BER) of 10⁻⁶ and no packet retransmission are the QoS parameters for the current streaming video application

Field 410 contains the RF protocol and frequency currently being used by the modem identified in field 404. Furthermore, Field 410 contains a listing of available RF protocols and frequencies which the modem is capable of using. The RF protocols can include TDMA, FDMA, CDMA or the like communication protocols. For example, the modem corresponding to modem ID 108 is currently using a TDMA communication protocol at a frequency of 2.4gHz. Other parameters, such as modulation method, error correction code and transmit power level may also be included. Furthermore, the modem corresponding to modem ID 108 is also capable of transmitting using TDMA, FDMA, or CDMA protocols at either 915mHz, 2.4gHz or 5.8gHz. Other capabilities may also be included such as spreading modes (e.g., Direct Sequence (DS) or Frequency Hopping (FH), Modulation method (e.g., FSK or QAM), Forward Error Correction (FEC) (e.g., Viterbi or Reed Solomon), available transmit power levels (e.g., 0, 5, 10, 15, 20 dBm) etc.) Alternatively, each wireless terminal might simply report a type identifier, which would allow the resource controller 200 to infer all the capabilities of the terminal.

Field 410 may further be divided to include the RF protocol and frequency currently being used by the modems and wireless terminals listed in field 406. Additionally, the RF protocols and frequencies which the corresponding wireless terminals are capable of using may be listed in a similar manner, as currently shown with respect to the modem having modem ID 108.

Field 412 contains the current RF environment corresponding to the wireless terminals in field 406. The current RF environment is a listing of all other uses of RF resources within the RF environment of a wireless terminal by other devices. As described above, the current RF environment can be measured by the modem 108-112 and/or the wireless terminals 116-132 temporarily refraining from transmitting, and only receiving the transmissions of other devices within the RF environment 100. For example, as shown in field 412 the modem corresponding to modem ID 108 is currently receiving a transmission from another source at a frequency of 2.4gHz using a TDMA protocol and at a received power of -65dBm and -60dBm. Other deducible information such as modulation type may also be included. Meanwhile, terminal 120 has detected an unknown waveform or noise with a peak value of -75dBm. Both terminals 108 and 120 would also report the signal levels detected for terminals participating in the wireless network. For example, modem 108 would report receiving signals from wireless terminal 120 at -60dBm and terminal 120 would report receiving signals from modem 108 at -60dBm.

As an example of operation, assume that the occupants of the dwelling unit 101 are using the modem 108 to communicate with the wireless terminal 120. The wireless terminal 120 is being used to watch streaming video that is being transmitted from the network 140. Furthermore, assume that at the same time the occupant of dwelling 102 is using wireless terminal 124 to participate in a video telephone conference with a remote user (not shown) connected with the network 140. Both of the occupants are using a frequency 2.4gHz to conduct the wireless communications between their wireless terminals 120, 124 and their respective modems 108, 110.

Due to the identical frequency use and the proximity of the dwellings 101, 102 within the RF environment 100, both of the occupant's wireless communications experience interference. As a result, the quality of the streaming video on the wireless terminal 120 and the video phone conversation on wireless terminal 124 is degraded.

When the interference begins, the resource managing device 106 can be notified by either one or both of the modems 108, 110 which are experiencing the interference. This can be accomplished by either of the occupants using their respective wireless terminals, 120, 124 to initiate a message to the resource managing device 106 that interference with another device is occurring or, the wireless devices might be preconfigured to automatically report interference to the resource manager 106. Alternatively, the resource managing device 106 can periodically query each of the modems 108-112 to request information, such as the current RF environment of each of the modems 108-112, in order to determine possible interference. No matter how the resource managing device 106 becomes aware of the interference, the wireless resource managing device 106 can query the modems 108-110 for information on their respective RF environments.

In response to the query, the modems 108, 110 can return a current RF environment report to the resource managing device 106. As described above with reference to Fig. 4, the RF environment report can include information about the modem 108-112 along with data related to the current use of the modem's RF environment. For example, the data in Fig. 4 corresponds to the RF environment data stored in modem 108 (field 404) in dwelling unit 101 of multiple dwelling unit 100 (field 402). As shown in field 406, the modem 108 belongs to a wireless network which includes wireless terminals 116, 118, and 120. In this example, the only terminal currently in use is wireless terminal 120 as reflected by a "Y" in field 408. As described earlier, the wireless terminal 120 is being used to watch streaming video that is being transmitted from the network 140.

Field 410 indicates that the modem 108 is using a TDMA protocol to transmit the streaming video to the wireless terminal 120 on a radio frequency of 2.4gHz. As described above, field 410 also contains a listing of all the available protocols and frequencies which the modem 108 is capable of using to communicate with the wireless terminals 116, 118, and 120.

The field 412 contains data on the current RF environment. The RF environment report can include information obtained by the modems 108-110 and/or wireless terminals 116-132 from "listening" to the RF environment. For example, the modem can sample the RF spectrum of interest for a period of time by refraining from transmitting and only receiving any signals which may still exist. In the current example, modem 108 may sample its respective RF environment by not transmitting to any of the corresponding wireless terminals 116-120 for a period of time, and instructing the wireless terminals 116-120 within the dwelling 101 to also temporarily refrain from transmitting. In the period of radio silence within the dwelling 101, the modem 108 can simply receive all the signals within a range of radio frequencies of interest. In this example, when the modem 108 samples, the signals being transmitted from the modem 110 will be received.

As shown in field 412, the current RF environment of modem 108 shows that another device is transmitting at a frequency of 2.4gHz and using a TDMA protocol and the power received. The field 412 can further include the terminal ID of any of the devices using the network resources of the RF environment 100. The terminal ID of the other device may be determined from the data received by the "listening" modem 108. For example, each transmission from a modem 108-112 can contain a modem ID so that a receiving wireless terminal 116-132 can identify the source of a data transmission received over the wireless network. In this example, the modem ID 110 has been determined from the received data.

Modem 110 can also perform a similar sampling function to generate a RF environment report that is similar to that shown in the data structure 400. However, in this example, modem 110's RF environment report will reflect at least modem 108's use of the RF resources.

As described above, the modems 108-110 can then generate a RF environment report in response to a query of the resource managing device 106. Alternatively, the modems 108-112 may periodically and independently of each other sample the RF environment and store the results in the modem memory 306 included in the modem 108-112. The sampling results may then be transmitted to the resource managing device 106 or may be held in the memory until the results are requested by the network managing device 106. The modems 108-110 can also poll the wireless terminals 116-120 for their RF environment and pass this information to the resource managing device as well.

Regardless of the method of collecting the RF environmental reports from the modems 108-112, once the RF environment reports are received by the resource managing device 106, the resource controller 200 can store the individual reports in the memory 206.

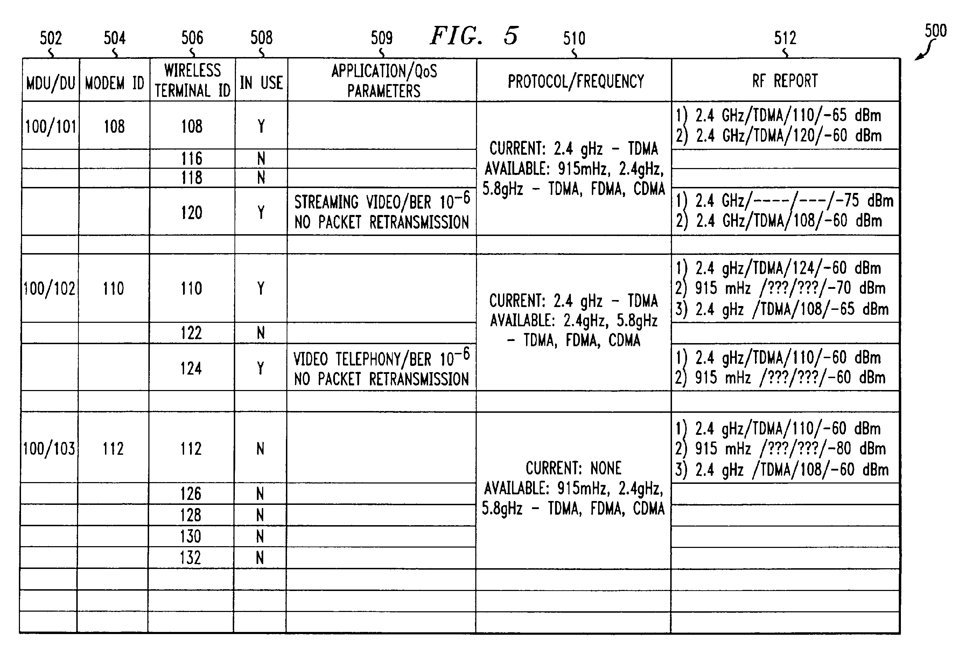

Figure 5 shows an exemplary data structure 500 for collecting and storing the individual current RF environment reports of the modems 108-112, connected with the network 140. The data structure 500 includes fields 502-512 which are similar to the fields 402-412 in data structure 400. Field 502 contains a multiple dwelling unit and dwelling unit identifier. As described above, the multiple dwelling unit identifier can include any numeric, alphanumeric, or the like identifier which uniquely identifies dwelling unit and corresponding a multiple dwelling unit. For example, the first entry in field 502 indicates that the entry is for dwelling unit 101 within multiple dwelling unit 100.

Field 504 contains a modem identifier of a modem 108-112 connected with the network 110. The modem ID in field 504 corresponds to the multiple dwelling unit and dwelling unit identifier and field 502. For example, the modem ID 108 in field 504 corresponds to the dwelling unit 101 in the multiple dwelling unit 100, indicating that the modem is located in dwelling 101 of multiple dwelling unit 100.

Field 506 contains the wireless terminal identifiers which include the modems 108-112 and wireless terminals 116-132 that are connected with the modem 108-112 identified in field 504. For example, wireless terminals having ID's 122 and 124 are in wireless communication with the modem having modem ID 110.

Field 508 contains a BOOLEAN variable to indicate whether a wireless terminal 116-132 corresponding to a wireless terminal ID in field 506 is currently being used. For example, the wireless terminal corresponding to wireless terminal ID 116 is shown as not currently in use, while the wireless terminal corresponding to wireless terminal ID 120 is currently in use, as indicated by a "Y" in field 508.

Field 509 contains application and QoS data corresponding to the wireless terminals in field 506.

Field 510 contains the RF protocol and frequency currently being used by the modem identified in field 504. Furthermore, field 510 contains a listing of available RF protocols and frequencies which the modem is capable of using. As described above, the RF protocols can include TDMA, FDMA, CDMA or the like communication protocols. For example, the modem corresponding to modem ID 110 is currently using a TDMA communication protocol at a frequency of 2.4gHz to communicate with wireless terminal 124. Furthermore, the modem corresponding to modem ID 110 is capable of transmitting using TDMA, FDMA, or CDMA protocols at either 2.4gHz or 5.8gHz. As described with reference to field 410 of data structure 400, the field 510 can further include current and available communication protocols and frequencies corresponding to each of the wireless terminals in field 506.

Field 512 is a collection of all the current RF environment reports for all of the modems 108-112 corresponding to the respective current RF environment reports stored in field 412 of each of the modems 108-112's modem memory 306. Once collected from each of the modems 108-112, the current RF environment report contain data on the use of the RF resources within the RF environment 100 from the perspective of each of the modems 108-112. As noted for Fig. 4, fields 510 and 512 may include additional parameters, such as spreading mode, modulation method, error correction method and transmit power level.

Based on the information stored in the memory 206, the resource controller 200 can determine a RF coordination strategy that will eliminate or minimize RF interference between the modems 108-112 of the dwellings 101-103 within the multiple dwelling unit 100. The RF coordination strategy can be developed by the resource controller 200 so that none of the modems 108-112's use of the RF resources will interfere with any other modem 108-112's or other device's use of the RF resources.

Returning to the example, when the resource controller 200 examines the RF environment data in field 512 of Figure 5, for modem 108 and modem 110, the controller will determine that the modems transmissions are interfering with each other. As shown in field 512, the modem having modem ID 108 is reporting having received a signal at 2.4gHz using a TDMA communication protocol. Additionally, the field 512 indicates that the signal had been received from modem 110. Likewise, the modem having modem ID 110 is reporting having received a first signal at 2.4gHz using a TDMA communication protocol, a second signal at 915mHz using an unknown communication protocol and a third signal at 2.4gHz using a TDMA protocol. Additionally, the field 512 indicates that the third signal had been received from the modem 108, while the second signal is from an unknown source or device.

Based on the data in field 512 the resource controller 200 can develop a RF coordination strategy in which the time slots of the TDMA communication protocol are divided between the modems 108-110 so that neither modem utilizes the same time slots at the 2.4gHz frequency at the same time. Additionally, the resource controller 200 will take into account the second signal at 915mHz which is originating from a source or device unknown to the system. Alternatively, the resource controller 200 can develop a RF coordination strategy wherein the modem 108 changes frequency to 5.8gHz and maintains a TDMA protocol while the modem 110 continues transmitting at 2.4gHz using the TDMA protocol.

For a more complex example, assume that both modems 108 and 110 and terminals 120 and 124 have two modulation types (QPSK, and 16-QAM) and several error correction code types (I/2 rate, K=7 Viterbi and GF(256) t=0 to 16 Reed Solomon in any combination) available. Further, assume that these capabilities and their current settings were reported to the resource controller 200. The resource controller 200 could find that in order to combat the interference they were experiencing, both modems and the terminals had adapted to the most robust set of parameters they support (QPSK modulation with concatenated Viterbi and t-16 Reed Solomon error correction coding). The resource controller 200 could find that with those settings, there were not enough time slots available to assign both modems exclusive sets of time slots. This is because while these resource settings are robust, they are not very bandwidth efficient. However, if no other sources of interference were apparent, the resource controller 200 could command all the modems and terminals to use, for example, 16 QAM with Reed Solomon t=8 and no Viterbi. This would reduce the number of slots required by each transmitter, and allow exclusive slots to be assigned such that the modems no longer interfered with each other.

It is important to note that the maximum transmit power at some of the modems and terminals might be insufficient to support the more bandwidth efficient waveforms. The resource controller 200 would have to ensure that the modems and terminals could transmit enough power to meet the QoS requirements of the applications being run. To determine this, the resource controller 200 would need to know the Application QoS requirements, the current and maximum transmit powers at all modems and terminals, the current receive powers at terminal 120 from modem 108, the current received power from modem 108 and 124, the current receive power at modem 110 from terminal 124, the current receive power at terminal 124 from modem 110, and the receiver characteristic (BER vs. received power in dBm) of all the modems and terminals.

As a further complication to the example, assume that modem 108 and terminal 120 could use either DS or FH spreading modes, and that modem 110 and terminal 124 could only use the FH spreading mode. Further assume there was no way to synchronize the time slots between a device using DS, and a device using FH. If modem 108 were using DS and modem 110 were using FH, there would be no way to assign modems 108 and 110 time slots that are guaranteed not to interfere with each other. However, if modem 108 and terminal 120 were commanded to use FH instead of DS, it would be possible to synchronize the systems such that exclusive time slots could be assigned. Furthermore, it would be possible to synchronize the hopping patterns such that if modems 110 and 108 did both transmit in the same slot, it could be guaranteed that their signals would not interfere with each other as they would always be on different frequencies. These are just a few examples of some of the resource management techniques that could be applied by resource controller 200 to improve the performance of wireless networks operating in unlicensed spectrum.

The RF coordination strategy can further be developed based on the particular type of application that the respective modem 108-112 is using. For example, if the modem 108 is operating at 2.4gHz and using an application that requires a large amount of bandwidth, such as very high resolution streaming video, while terminal 110 is transmitting at 2.4gHz, but using an application that requires a very low amount of bandwidth, such as e-mail, then the RF coordination strategy can reflect the different needs of the modems 108,110. The RF coordination strategy may include assigning a large amount of time slots for the large bandwidth needs of modem 108, while assigning relatively fewer time slots to the small bandwidth needs of modem 110. Alternatively, using an FDMA communication protocols, the RF coordination strategy may provide modem 108 with a relatively large portion of the RF spectrum, while providing modem 110 with a relatively smaller portion. Accordingly, any division of network resources can be made by the resource controller 200 in order to dynamically and efficiently distribute network resources between the modems 108-112 sharing the RF environment 100. Similarly, communications which require a robust channel (i.e., voice and streaming video) can be assigned frequencies without interference, while applications which don't require as robust a channel (i.e., certain types of non-realtime data traffic, such as gas/electric usage reports to utility companies) can use channels which have more interference.

Once a RF coordination strategy has been developed, the resource controller 200 can then transmit the RF coordination strategy to the respective modems 108, 110. When the modems 108, 110 receive the instructions, the modems 108, 110 can alter communications with their respective wireless terminal 116-124 in order to reduce interference and improve their communication quality. In this example, modem 108 will continue to transmit at 2.4gHz and use a TDMA communication protocol that is limited to a first assigned set of time slots. The modem 110 will also continue to transmit at 2.4gHz and use a TDMA protocol that is limited to a second assigned set of time slots.

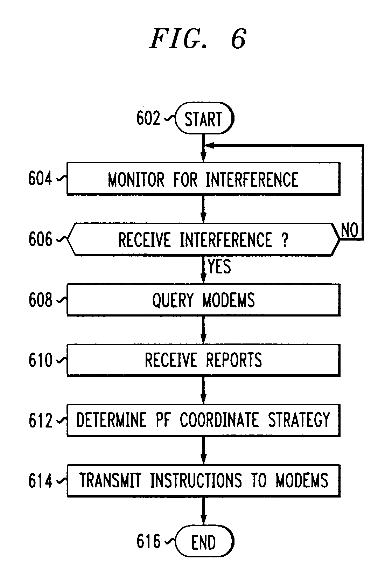

Figure 6 shows a flowchart outlining an exemplary process for coordinating communication in a wireless network. In step 602 the process begins and control proceeds to step 604 where a resource managing device monitors numerous modems connected with a network for an indication of interference.

The process then proceeds to step 606 where a determination is made whether interference has occurred. In step 606, if interference has occurred the process proceeds to step 608; otherwise, the process returns to step 604 and the resource managing device continues to monitor the modems.

In step 608, the wireless resource manager queries the modems to determine a RF environment report. The RF environment report can include a current RF spectrum use along with any RF protocols which the modems are capable of or currently using. The process then proceeds to step 610.

In step 610, the RF environmental reports are received by the resource manager. In step 612 the resource manager determines an RF coordination strategy for eliminating or minimizing any interference in the wireless network based on the RF environmental reports. The process then proceeds to step 614.

In step 614 the resource managing device transmits instructions based on the RF coordination strategy to the modems in order to minimize the amount of interference in each of the wireless networks. The process then proceeds to step 616 where the process ends.

As shown in Figs. 2 and 3, the method of this invention is preferably implemented on a programmed processor. However, the resource managing device 106 can also be implemented as part of a switch or a stand alone on a general purpose or a special purpose computer, a programmed microprocessor or microcontroller and peripheral integrated circuit elements, an Application Specific Integrated Circuit (ASIC), or other integrated, a hardware electronic or logic circuit such as a discrete element circuit, a programmable logic device such as a PLD, PLA, FPGA, or PAL, or the like. In general, any device on which exists a finite state machine capable of implementing the flowchart shown in Fig. 6 can be used to implement the resource managing device 106 functions of this invention.

While this invention has been described in conjunction with the specific embodiments thereof, it is evident that many alternatives, modifications, and variations will be apparent to those skilled in the art. In particular, the methods with which the wireless network coordination is contracted and delivered can be diverse. In some cases, users may subscribe to a service for a fee where their home wireless network is managed via the external network. Or, the service might be offered for free as a benefit of subscribing to the external network. Alternatively, the service could be offered for a fee on a per use request basis. Also, the information provided to the resource controller 200 by the home network elements (modems and wireless terminals) may be volunteered or polled. If polled, information provided may be mandatory or optional. Similarly, when the resource controller 200 provides recommended resource allocations, those recommendations may be mandatory, or optional.

Accordingly, preferred embodiments of the invention as set forth herein are intended to be illustrative, not limiting. There are changes that may be made without departing from the spirit and scope of the invention.

## Claims

1. A method for providing coordinated use of network resources between a plurality of wireless networks, each of the wireless networks having at least one modem and at least one wireless terminal, comprising:
monitoring a RF environment of at least one of the modems to generate a RF environment report;
determining a RF coordination strategy based on the RF environment report; and
instructing the at least one modem on how to use the network resources based on the RF coordination strategy.

2. The method according to claim 1, wherein the step of instructing includes:
transmitting instructions on the use of network resources to the at least one modem based on the RF coordination strategy to eliminate a simultaneous use of the same network resources by the plurality of modems.

3. The method according to claim 1, wherein the step of instructing includes:
instructing at least one of the modems to change a current use of network resources based on the RF coordination strategy.

4. The method according to claim 3, wherein the step of monitoring a RF environment includes:
measuring an interference level of each of the wireless networks, the interference level being the amount of interference received by the modems and the wireless terminals of each of the wireless networks.

5. The method according to claim 4, wherein the step of measuring includes:
collecting the interference levels of each of the wireless networks.

6. The method of claim 1, wherein the RF environment report includes at least a current use of a radio frequency spectrum by devices other than the at least one of modem.

7. The method according to claim 1, wherein the RF coordination strategy includes instructions on which radio frequency and communication protocol the wireless network should use.

8. The method according to claim 1, wherein the plurality of wireless networks share the same RF environment, the RF environment having a finite amount of network resources.

9. The method according to claim 8, wherein the network resources include at least frequency and bandwidth.

10. The method according to claim 1, further comprising:
collecting subscriber information from a plurality of subscribers, the subscriber information including at least a wireless network identifier; and
providing coordinated use of the network resources at the request of the subscriber.

11. The method according to claim 1, wherein the at least one modem can either accept and comply with the instruction on how to use the network resources, or not accept and not comply with the instructions on how to use the network resources.

12. A device for coordinating the use of network resources by a plurality of wireless networks, each wireless network having at least one modem, comprising:
a memory;
a resource controller connected with the memory that monitors a RF environment of the modems of each of the wireless networks, determines a RF coordination strategy for the use of the network resources by the wireless networks based on the RF environment of the modems, and transmits instructions on the use of the network resources to the at least one modem of the wireless networks based on the RF coordination strategy.

13. The method according to claim 12, wherein the modems of each of the wireless networks are connected to a network.

14. The method according to claim 12, further comprising:
transmitting the RF environment report of at least one of the modems over a network to a resource managing device.

15. The method according to claim 12, wherein the RF environment report includes at least a current use of a radio frequency spectrum by devices other than the at least one of modem.

16. The method according to claim 12, wherein the RF coordination strategy includes instructions on which radio frequency and communication protocol to use.

17. The method according to claim 12, wherein the plurality of wireless networks share the same RF environment, the RF environment having a finite amount of network resources.

18. The method according to claim 17, wherein the network resources include at least frequency and bandwidth.
